# EUROPÄISCHE PATENTSCHRIFT

(11) **EP 1 779 301 B1**
(45) Veröffentlichungstag und Bekanntmachung des Hinweises auf die Patenterteilung: **28.11.2012**
(21) Anmeldenummer: 05776231.2
(22) Anmeldetag: 19.08.2005
(51) Int. Cl.: G06K 13/08

(54) **PUSHMATIC SMART CARD CONNECTOR**
PUSHMATIC SMART CARD CONNECTOR
CONNECTEUR DE CARTE A PUCE DE TYPE "PUSHMATIC"

(30) Priorität: 20.08.2004 DE 102004040448
(43) Veröffentlichungstag der Anmeldung: 02.05.2007
(73) Patentinhaber: Amphenol-Tuchel Electronics GmbH, 74080 Heilbronn (DE)
(72) Erfinder: BERTSCH, Michael, Steffen, 74074 Heilbronn (DE)
(74) Vertreter: Carstens, Dirk Wilhelm
(86) Internationale Anmeldenummer: PCT/EP2005/009000
(87) Internationale Veröffentlichungsnummer: WO 2006/021384

(56) Entgegenhaltungen:
- EP-A- 1 170 692
- DE-C1- 19 513 359
- US-A1- 2004 009 690

## Beschreibung

Die Erfindung bezieht sich auf einen Smart Card Connector mit einem Gehäuse, in das eine Smart Card (im Folgenden kurz "Karte" genannt) einschiebbar ist, wobei in dieser eingeschobenen Stellung die auf der Karte vorgesehenen Kartenkontakte mit im Gehäuse angeordneten Kontaktelementen in Kontakt gebracht werden. Ferner wird ein im Gehäuse bewegbar angeordneter Kartenauswurfschieber sowie ein Kartenverriegelungsschieber beim Einschieben der Karte in deren Lesestellung von der Karte mitgenommen und durch Verriegelungsmittel beim Erreichen der Lesestellung der Karte diese in der Leseposition gehalten.

Bei herkömmlichen Smart Card Connectoren der eingangs genannten Art ist der Hub, um den die Karte definiert ausgeschoben wird durch den Hub des Kartenauswurfschiebers und den Hub des Kartenverriegelungsschiebers begrenzt. Auch ist es nötig, jeweils eine Feder für den Kartenverriegelungsschieber sowie den Kartenauswurfschieber vorzusehen. Ferner sind bekannte Smart Card Connectoren von relativ kompliziertem Aufbau und machen zahlreiche Einzelteile erforderlich.

In der gattungsgemäßen Druckschrift DE 195 13 359 C1, wird ein Chipkartenleser mit einem Gehäuse offenbart, in dem eine Führungsbahn zur Aufnahme einer Chipkarte ausgebildet ist. Der Chipkartenleser weist weiterhin einen gehäuseseitigen Kontaktträger, und ein Verriegelungsglied auf, das die Chipkarte in der Lesestellung hintergreift, wobei das Verriegelungsglied aus einem L-förmigen Arm besteht.

Hinsichtlich des Standes der Technik wird ferner auf die Druckschrift EP 1 170 692 A und auf die Druckschrift US 2004/009 690 A1 verwiesen.

Erfindungsgemäß wird ein Smart Card Connector gemäß Anspruch 1 vorgesehen. Weitere Ausgestaltungen der Erfindung ergeben sich aus den Unteransprüchen.

Der erfindungsgemäße Smart Card Connector besitzt einen Kartenverriegelungsschieber, der derart mit dem Kartenauswurfschieber gekoppelt ist, dass beim Einschieben der Karte mit Bewegung des Kartenauswurfschiebers aus einer Ruhestellung zu einer Lesestellung hin, zunächst keine Bewegung des Kartenverriegelungsschiebers bewirkt wird, so dass der Kartenauswurfschieber einen größeren Hub besitzt als der Kartenverriegelungsschieber. Dadurch wird nach Aufheben der Kartenverriegelung die Karte definiert mittels Federkraft durch den Kartenauswurfschieber ausgeworfen, so dass die Karte leicht mit den Fingern zu greifen ist. Ferner weist der erfindungsgemäße Smart Card Connector eine flache Bauweise mit einem Deckel zur Abdeckung beweglicher Teile und einer Stapelfähigkeit auf.

Weitere Vorteile, Ziele und Einzelheiten der Erfindung ergeben sich aus der Beschreibung eines Ausführungsbeispiels anhand der Zeichnung; in der Zeichnung zeigt:
- Figur 1:: Eine Draufsicht auf die Oberseite eines ersten Ausführungsbeispiels eines Pushmatic Smart Card Connectors ohne Deckel im entriegelten Zustand;
- Figur 2:: Eine Darstellung ähnlich Figur 1, wobei hier das Gehäuse mit Deckel dargestellt ist;
- Figur 3:: Einen Schnitt längs der Linie A-A der Figur 2;
- Figur 4:: Einen Schnitt längs der Linie B-B der Figur 2;
- Figur 5:: Eine Detailvergrößerung des linken Teils des in Figur 3 darge stellten Schnittes; .
- Figur 6:: Eine Detailvergrößerung des linken Teils des in Figur 4 darge stellten Schnittes;
- Figur 7:: Eine perspektivische Ansicht des in Figur 1 dargestellten Smart Card Connectors;
- Figur 8:: Eine Darstellung ähnlich Figur 1, wobei hier jedoch der verriegel te Zustand des Smart Card Connectors dargestellt ist;
- Figur 9:: Eine Darstellung ähnlich Figur 8, wobei hier der Deckel mit dargestellt ist;
- Figur 10:: Einen Schnitt längs der Linie C-C der Figur 9;
- Figur 11:: Einen Schnitt längs der Linie D-D der Figur 9;
- Figur 12:: Eine Vergrößerung des linken Teils der Figur 10;
- Figur 13:: Eine Vergrößerung des linken Teils der Figur 11, wobei man die durch den Kartenverriegelungsschieber verriegelte Karte erkennt;
- Figur 14:: Eine perspektivische Ansicht der Figur 8;
- Figur 15:: Eine perspektivische Ansicht ähnlich der Figur 14, wobei hier der Smart Card Connector mit eingelegter Karte dargestellt ist;
- Figur 16:: Eine perspektivische Ansicht der Unterseite eines Smart Card Connectors der auf einem zweiten Smart Card Connector aufgesetzt bzw. aufgestapelt ist.

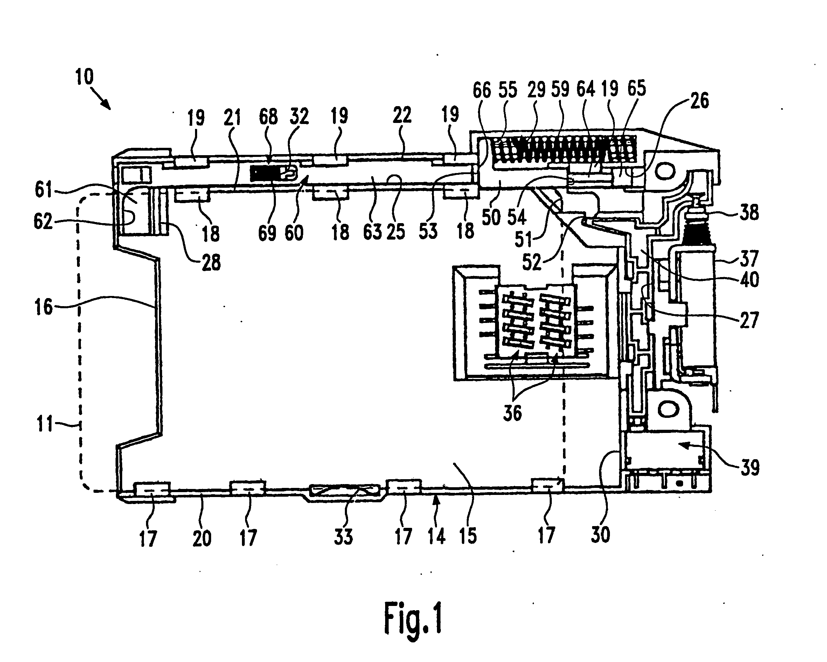

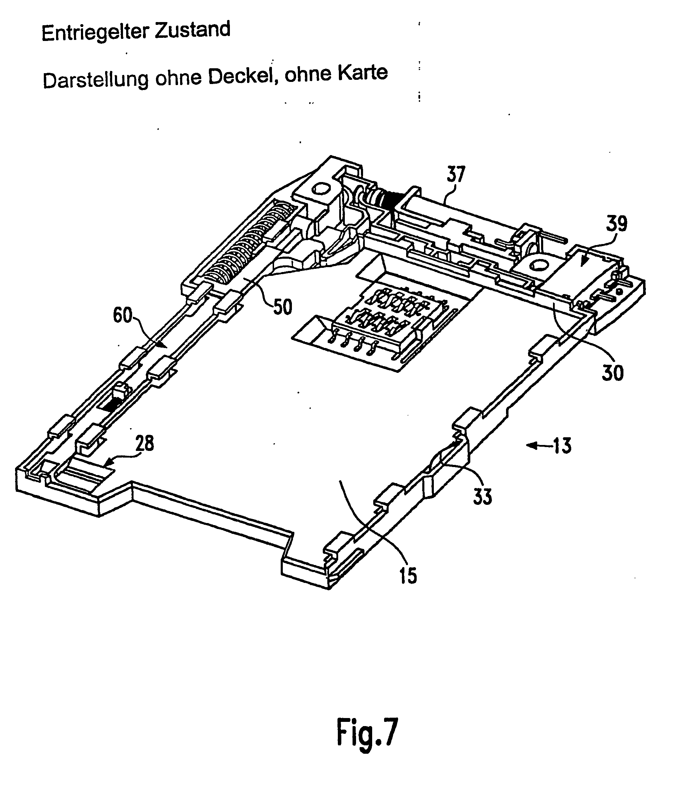

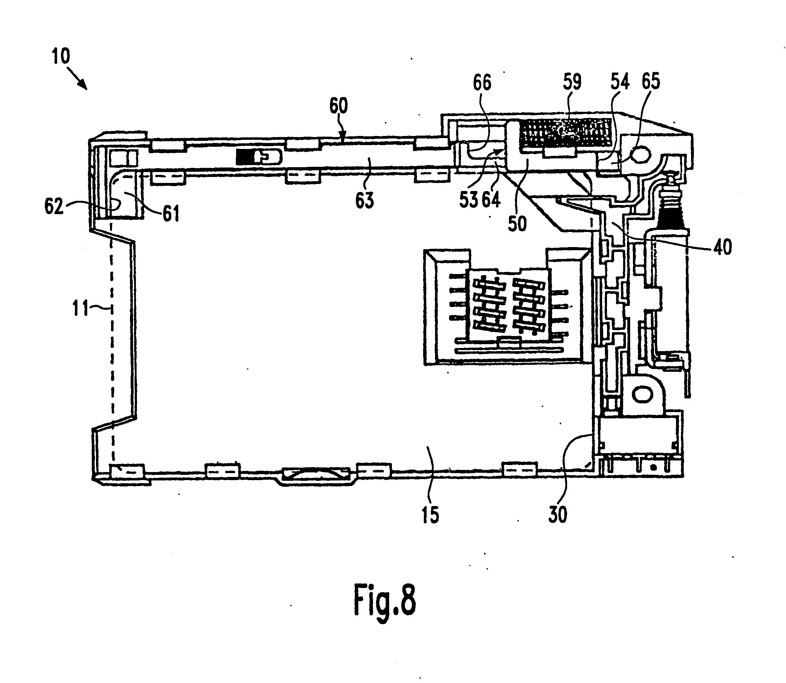

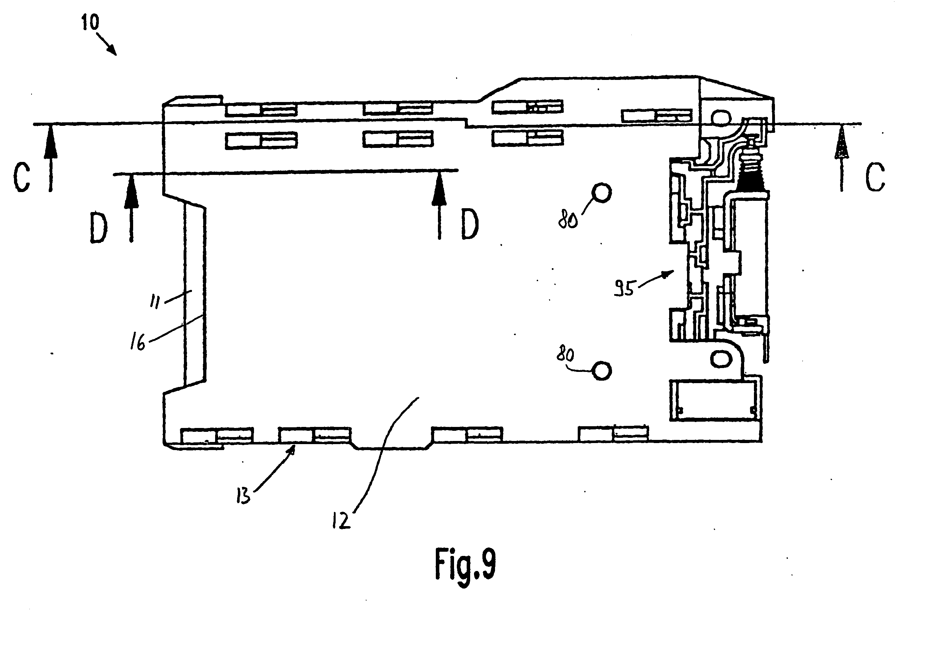

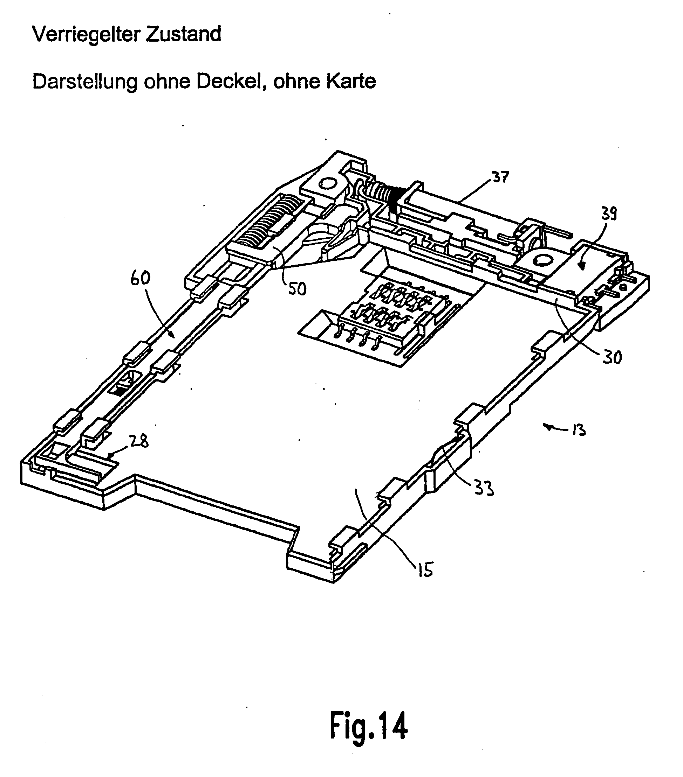

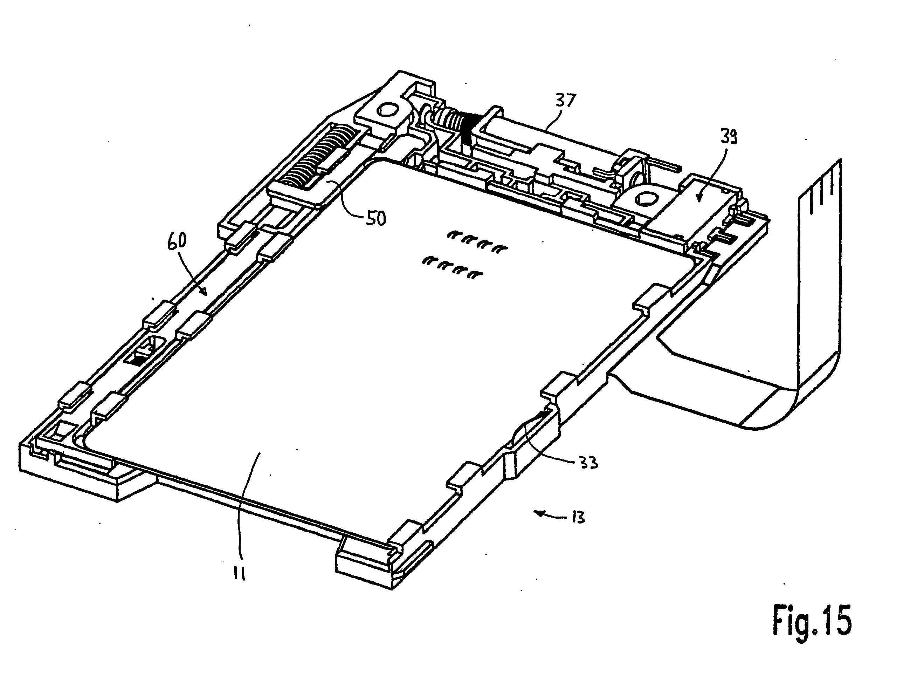

Die Figuren 1 bis 7. zeigen einen Pushmatic Smart Card Connector 10 im entriegelten Zustand in einer Ruheposition mit einer nicht vollständig eingesetzten Smart Card bzw. Karte 11. Die Figuren 8 bis 15 zeigen den Smart Card Connector 10 in einem verriegelten Zustand bei dem die Karte sich in einer verriegelten Kartenlesestellung befindet.

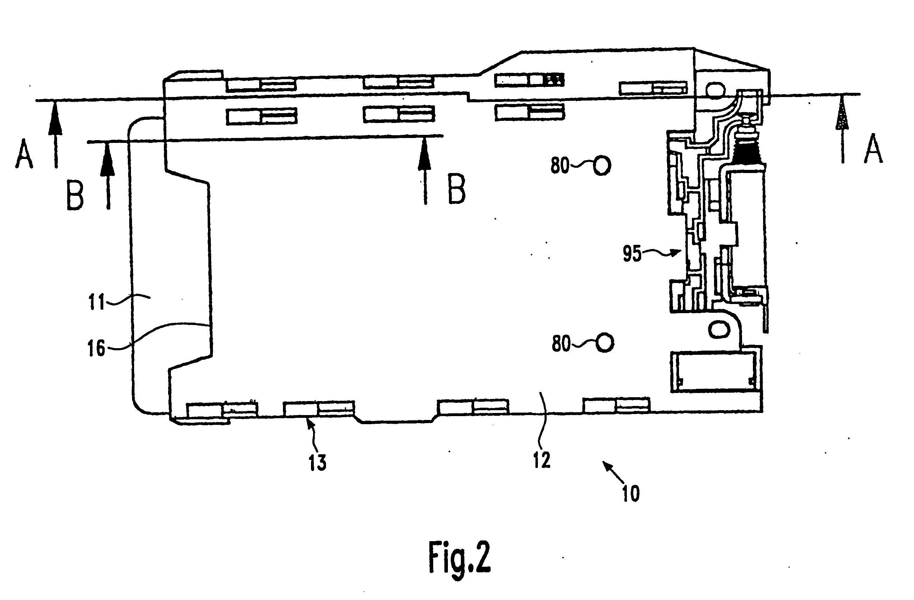

Figuren 1 und 2 zeigen, dass der Smart Card Connector 10 ein Gehäuse 13 vorzugsweise in der Form eines im Wesentlichen ebenen bzw. plattenförmigen Kartentragelements bzw. einer Bodenplatte 14 und einen Deckel 12 (in Figur 2 gezeigt) aufweist. Die Bodenplatte 14 weist auf ihrer Oberseite eine ebene Kartentragfläche 15 auf, auf der eine gestrichelt dargestellte Smart Card bzw. Karte 11 aufliegt. Die ebene Kartentragfläche 15 bildet zusammen mit dem Deckel 12 einen Kartenaufnahmeraum; in einer Aussparung der ebenen Kartentragfläche 15 sind die Kontaktelemente 36 zum Kontaktieren der Kartenkontakte angeordnet.

Das Gehäuse 13 sowie auch die Bodenplatte 14 besitzt zwei Längsseitenkanten sowie eine vordere und eine hintere Querkante, wobei an der vorderen Querkante eine durch die ebene Kartentragfläche 15 und den Deckel 12 gebildete Öffnung 16 zum Einschieben der Karte 11 gebildet ist. Die Bodenplatte 14 weist an einer Längsseite einen Längssteg 20 auf und an der gegenüberliegenden Längsseite parallel in Längsrichtung verlaufende Längsstege 21 und 22 auf. Der Längssteg 21 ist in Richtung der Mitte der Bodenplatte gegenüber dem Längssteg 22 versetzt. Die Längsstege 20 und 21 bilden die seitlichen Begrenzungskanten für den Kartenaufnahmeraum. Die Längsstege 21 und 22 bilden eine Führungsrinne 25 zur Aufnahme und Führung eines Kartenverriegelungsschiebers 60. Auf den Längsstegen 20, 21 und 22 sind jeweils mindestens ein vorzugsweise jedoch mehrere Deckelhalter 17, 18 bzw. 19 angeordnet, die zusammen mit den am Deckel angebrachten Öffnungen einen bajonettähnlichen Verschluss bilden, durch den bei der Montage des Smart Card Connectors der Deckel 12 auf die Bodenplatte 14 gesetzt und dann in die Figur 2 gezeigte Position verschoben wird. Dabei verrastet der Deckel 12 mit einem Rastelement 95 an der Bodenplatte 14 und zwar beim Verschieben in Richtung der hinteren Querkante.

Eine Verlängerung 26 der Führungsrinne 25 ist in Richtung der hinteren Querkante der Bodenplatte 14 ausgebildet. Vorzugsweise 90° zu der Führungsrinne 25 ist eine Führungsrinne 27, vorzugsweise parallel zur hinteren Querkante in der Bodenplatte 14 angeordnet. Die geradlinige Führungsrinne 27 dient zur Aufnahme und zur Führung eines Verriegelungsschiebers 40. Die Bodenplatte 14 weist weiterhin einen Kartenanschlag 30 parallel zur hinteren Querkante auf, wenn die Karte 11 bis zur und in die Leseposition in das Gehäuse 13 eingeschoben ist. Parallel zur Verlängerung 26 der Führungsrinne 25 ist eine Fewderaufnahmekammer 29 zur Aufnahme einer Kartenauswurffeder 59 vorgesehen. Im Bereich der vorderen Querkante der Bodenplatte 14 ist eine Vertiefung vorgesehen, die eine Nockenkurve bzw. Kurve 28 zur Aufnahme und Führung eines am Kartenverriegelungsschieber 60 ausgebildeten Verriegelungsarms 61 aufweist. Im Bereich der Führungsrinne 25 ist noch eine Federabstützung 32 vorgesehen, die mit einer optionalen Druckfeder 69, die in einer Aufnahmeausnehmung 68 des Kartenverriegelungsschiebers 60 angeordnet ist in Eingriff kommt. Diese optionale Druckfeder 69 dient dazu, toleranzbedingte Klappergeräusche bei Vibrationen zu verhindern.

Der Längssteg 20 bildet eine Ausbuchtung, in der eine vorzugsweise als Blattfeder ausgebildete Haltefeder 33 angeordnet ist, die einerseits dazu dient, ein Herausfallen der Karte 11 beim Auswerfen bzw. Ausschieben der Karte 11 aus ihrer Leseposition durch den Kartenauswurfschieber 50 zu verhindern und zwar durch ein leichtes Klemmen der Seitenkante der Karte 11 und andererseits dazu dient, die Karte 11 im eingeschobenen verriegelten Zustand in ihrer Leseposition am Klappern zu hindern. Durch die Haltefeder 33 liegt die Karte 11 am Längssteg 21 an und dadurch wird das Spiel der Karte 11 eliminiert. Die Karte 11 befindet sich damit in einer definierten Position.

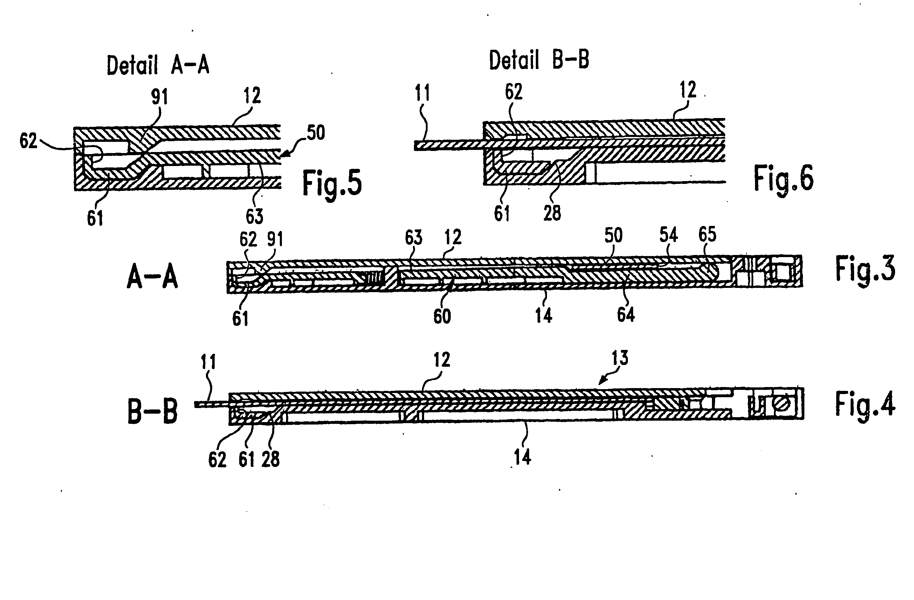

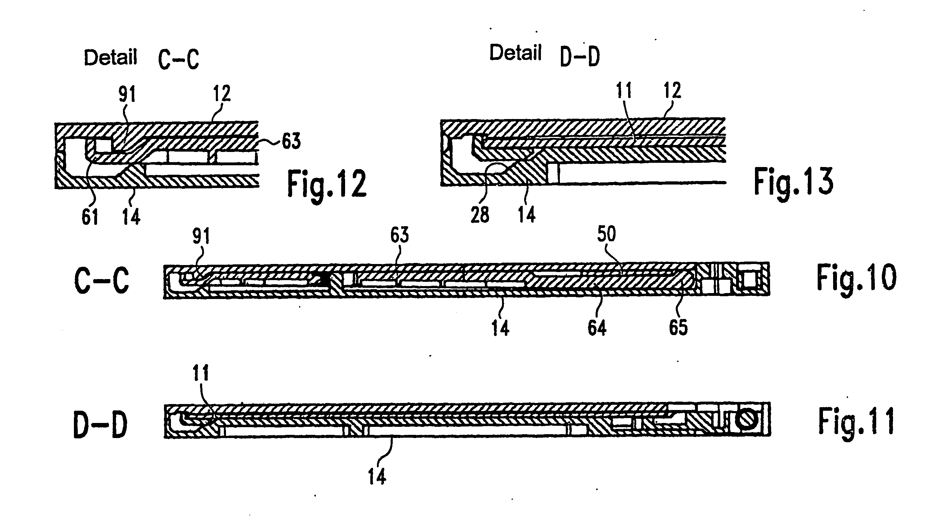

Beim Einschieben der Karte 11 in den Smart Card Connector 10 wird der Kartenauswurfschieber 50 - bei Anschlag der Karte 11 an einem Kartenschiebeanschlag 51 des Kartenauswurfschiebers 50 - aus einer Ruheposition entgegen der Kraft der am Kartenauswurfschieber 50 angreifenden Kartenauswurffeder 59 in eine Verriegelungsposition bewegt bzw. verschoben. In der Verriegelungsposition kommt eine am Kartenauswurfschieber 50 angeordnete Rastnase 52 mit dem Verriegelungsschieber 40 in Eingriff und wird dadurch in der Verriegelungsposition (gezeigt in Figuren 8 bis 15) gehalten. Durch einen Elektromagneten 37, der 90° quer zur Einschieberichtung der Karte 11 und somit parallel zur Bewegungsrichtung des Verriegelungsschiebers 40 angeordnet ist kann über einen Zuganker 38 des Elektromagneten 37, der mit dem Verriegelungsschieber 40 gekuppelt ist, der Verriegelungsschieber 40 so bewegt werden, dass der Kartenauswurfschieber 50 freigegeben wird und sich aufgrund der gespannten. Feder 59 zurück zur Ruheposition bewegt und dabei die Karte 11 soweit aus dem Gehäuse 13 herausschiebt, dass die Karte 11 leicht mit der Hand gegriffen werden kann. Die Kartenauswurfschieber 50 weist dazu den Kartenschiebeanschlag 51 auf, der mit einer Ecke der Karte 11 in Eingriff kommt, sowie eine Federabstützung 55 auf die mit der Kartenauswurffeder 59 in Eingriff steht. Der Kartenauswurfschieber 50 weist auf seiner Unterseite eine Längsnut auf, die axial einen verjüngten Abschnitt 64 des Kartenverriegelungsschiebers 60 aufnimmt. Der Kartenverriegelungsschieber 60 besitzt eine im Wesentlichen langgestreckte einstückige Form. Der Kartenverriegelungsschieber 60 verläuft parallel zur Seitenkante des Gehäuses 13 im Wesentlichen in der Führungsrinne 25 angeordnet. Der Kartenverriegelungsschieber 60 besitzt an einem vorderen, d.h. im Bereich der vorderen Querkante der Bodenplatte 14 liegenden Ende einen parallel zur vorderen Querkante der Bodenplatte 14 angeordneten Verriegelungsarm 61 der eine Verriegelungskante 62 aufweist, die mit der Hinterkante der Smart Card 11 in Eingriff kommt, wenn diese bis zur Leseposition in den Smart Card Connector eingeschoben ist und dadurch die Karte 11 in der Leseposition verriegelt. Der Kartenverriegelungsschieber 60 besitzt senkrecht zum Verriegelungsarm 61 einen damit einstückig ausgebildeten Betätigungsarm 63, der sich in der Führungsrinne 25 erstreckt und dann in Richtung der hinteren Querkantedes Gehäuses in den verjüngten Abschnitt 64 übergeht. Am Ende des verjüngten Abschnitts 64 ist ein Drehschiebelagerkörper 65 von insbesondere tonnenförmiger Gestalt angeordnet. Beim Einschieben der Karte 11 wird der Kartenverriegelungsschieber 60 vom Kartenauswurfschieber 50 in die Kartenverriegelungsposition gezogen, und zwar gleitet der Kartenauswurfschieber 50 zunächst entlang des verjüngten Abschnitts 64 des Kartenverriegelungsschiebers 60 ohne diesem zunächst zu bewegen. Dann, kurz bevor die Karte 11 die Leseposition erreicht, kommt ein am Kartenauswurfschieber 50 angeordneter und über dem verjüngten Abschnitt 64 liegenden Kartenverriegelungsanschlag 54 mit dem Drehschiebelagerkörper 65 in Eingriff und verschiebt diesen in Einschieberichtung der Karte 11. Dadurch wird das andere Ende des Kartenverriegelungsschiebers 60 auch in Einschubrichtung der Karte 11 mitgezogen und damit der Verriegelungsarm 61 über die in der Bodenplatte 14 angebrachte Kurve 28 nach oben in Richtung des Deckels 12 bewegt. Dieser Verriegelungsvorgang ist in den in Figur 3 bis 6 (entriegelte Position bzw. Ruheposition) und Figur 10 bis 13 (verriegelte Position bzw. Leseposition) gezeigten Schnitten sehr gut zu sehen. In der verriegelten Position wird der Kartenauswurfschieber 50 durch den Verriegelungsschieber 40 blockiert bzw. verriegelt und blockiert somit auch den Kartenverriegelungsschieber 60. Somit ist die Karte 11 im Gehäuse 13 sicher verriegelt, d.h. insbesondere gegen unerlaubtes Entnehmen gesichert. Durch die Anordnung des Verriegelungsschiebers 40 sowie des Elektromagneten 37 quer zur Einschubrichtung der Karte ist auch eine schlagsichere Verriegelung gegeben. Nach dem vorzugsweise elektromagnetischen Lösen des Verriegelungsschiebers 40 wird der Kartenauswurfschieber 50 durch die Federkraft der Kartenauswurffeder 59 in die Ruheposition bewegt und dadurch die Karte 11 ausgeworfen. Die auszuwerfende Karte 11 nimmt dabei den Kartenverriegelungsschieber 60 durch die Verriegelungskante 62 mit und bringt diesen in seine Ruheposition bzw. Entriegelungsposition. Ober der Vertiefung mit der Kurve 28 sind im Deckel 12 Führungselemente 91 (siehe Figuren 3, 5, 10 und 12) angeordnet, die das vordere Ende des Kartenverriegelungsschiebers 60 mit dem Verriegelungsarm 61 in die Vertiefung in der Bodenplatte 14 dabei hinein führen und in der Entriegelungsposition des Kartenverriegelungsschiebers 60 auch in der Vertiefung halten.

Ist die Karte 11 ausgeworfen, dann hält der federbelastete Kartenauswurfschieber 50 mit einem Kartenentriegelungsanschlag 53 der mit einem am Kartenverriegelungsschieber 60 durch den Übergang vom verjüngten Abschnitt 64 zum Betätigungsarm 63 gebildeten Entriegelungsanschlag 66 in Eingriff steht, den in der Entriegelungsposition. Damit ist der Kartenschacht nicht blockiert und ein Einstecken der Karte 11 jederzeit möglich.

Der Kartenverriegelungsschieber 60 weist in seinem Betätigungsarm 63 eine Aussparung bzw. Druckfederaufnahmekammer 68 auf. Der Kartenauswurfschieber 50 und der Verriegelungsschieber 40 sind weiterhin so gestaltet, dass der Verriegelungsvorgang von einem auf der Bodenplatte 14 angeordneten Schalter 39 sicher detektiert werden kann.

Vorteile der erfindungsgemäßen Ausgestaltung des Smart Card Connectors sind weiterhin, dass dieser eine flache Bauweise und einen Deckel zu Abdeckung beweglicher Teile aufweist. Durch die Anordnung des Verriegelungsschiebers 40 bzw. des Verriegelungsmagneten quer zur Steckrichtung der Karte 11 ist eine schlagsichere Ausführung gegeben. Durch die erfindungsgemäße Verriegelungsmechanik bzw. Kombination des Kartenverriegelungsschiebers 60 mit dem Kartenauswurfschieber 50 kann auf eine zweite Feder verzichtet werden. Weiterhin kann die Verriegelungsmechanik platzsparend auf einer Seite des Gehäuses 13 untergebracht werden. Durch Ausgestaltung des Kartenauswurfschiebers 50 und des Kartenverriegelungsschiebers 60 als getrennte Elemente ist eine größerer Auswurfweg bzw. Hub der Karte 11 möglich. Dadurch kann die Karte 11 relativ weit definiert ausgeschoben werden und man kann die Karte 11 leicht mit den Fingern greifen und entnehmen. Weiterhin wird dadurch ein kurzer Verriegelungsweg möglich. Dadurch befindet sich die Karte 11 in verriegeltem Zustand trotz kurzer Bauform des Smart Card Connectors in dem vom Gehäuse 13 umschlossenen Kartenaufnahmeraum. Das ermöglicht eine manipulationssichere Verriegelung der Karte 11 im Smart Card Connector 10.

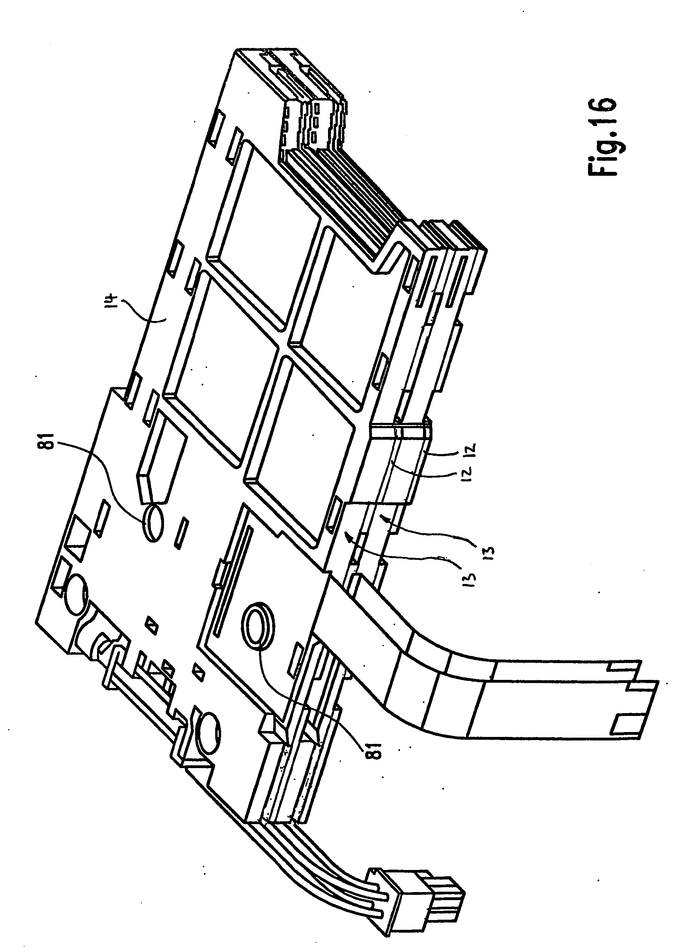

Der Deckel 12 weist wie in Figur 2 gezeigt zwei pilzförmige Rastnasen 80 auf, die mit auf der Unterseite der Bodenplatte 14 angebrachten Rastnasenaufnahmeöffnungen 81 (in Figur 16 gezeigt) beim Stapeln von mehreren erfindungsgemäßen Smart Card Connectoren 10 in Eingriff kommen. In Figur 16 ist eine perspektivische Ansicht der Unterseite eines Stapels von zwei erfindungsgemäßen Smart Card Connectoren zu sehen. Die auf dem Deckel 12 angeordneten pilzförmigen Rastnasen 80 sind optional bzw. lassen sich entfernen (abbrechen), um eine möglichst niedrige Bauform des Smart Card Connectors zu erreichen.

Wie im Vergleich der Schnitte in Figur 3 bis 10 zu sehen ist, dreht sich der Kartenverriegelungsschieber 60 beim Verschieben aus der in Figur 3 gezeigten Ruheposition in die in Figur 10 gezeigte Verriegelungsposition leicht um das Drehschiebelager 65. Diese Drehbewegung wird verursacht durch die in der Bodenplatte 14 angebrachte Kurve 28.

### Bezugszeichenliste:

- 10: Smart Card Connector
- 11: Karte
- 12: Deckel
- 13: Gehäuse
- 14: Bodenplatte
- 15: ebene Kartentragfläche
- 16: Öffnung
- 17: Deckelhalter
- 18: Deckelhalter
- 19: Deckelhalter
- 20: Längssteg
- 21: Längssteg
- 22: Längssteg
- 25: Führungsrinne
- 26: Führungsrinne (Verlängerung von 25)
- 27: Führungsrinne für Verriegelungsschieber
- 28: Kurve
- 29: Federaufnahmekammer
- 30: Kartenanschlag
- 32: Federabstützung
- 33: Haltefeder
- 36: Kontaktelemente
- 37: Elektromagnet
- 38: Zuganker
- 39: Schalter
- 40: Verriegelungsschieber
- 50: Kartenauswurfschieber
- 51: Kartenschiebeanschlag
- 52: Rastnase
- 53: Kartenentriegelungsanschlag
- 54: Kartenverriegelungsanschlag
- 55: Federabstützung
- 59: Kartenauswurffeder
- 60: Kartenverriegelunsschieber
- 61: Verriegelunsarm
- 62: Verriegelungskante
- 63: Betätigungsarm
- 64: verjüngter Abschnitt
- 65: Drehschiebelagerkörper
- 66: Entriegelungsanschlag
- 68: Druckfederaufnahmeausnehmung
- 69: Druckfeder
- 80: pilzförmige Rastnase
- 81: Rastnasenaufnahmeöffnung
- 91: Führungselement
- 95: Rastelement

## Patentansprüche

1. Smart Card Connector (10) mit:einem
Gehäuse (13) mit einer Bodenplatte (14) und einer oberhalb der Bodenplatte (14) angeordneten Öffnung (16) zum Einschieben einer Karte (11),
einem im Gehäuse bewegbar angeordneten Kartenauswurfschieber (50)
der beim Einschieban der Smart Card aus einer Ruheposition entgegen der Kraft einer am Kartenauswurfschieber (50) angreifenden Kartenauswurffeder (59) in eine Verriegelungsposition bewegt wird bzw. verschlebbar ist,
einem Verriegelungsmittel (40) zur Verriegelung und Freigabe des Kartenauswurfschiebers (50) in und aus seiner Verriegelungsposition
einem relativ zu einem einen Karten verriegelungs anschlag (54) aufweisen den Kartenauswurfschieber 50 und von diesem mittels dieses Kartenverriegelungsanschlags (54) verschiebbaren Kartenverriegelungsschleber (60) mit einem Verriegelungearm (61) der beim Einschieben der Karte in Ihre Lesestellung mit der Hinterkante der Karte in Eingriff kommt und die Smart Card in der Lesestellung verriegelt, wobei der Kartenverriegelungsschieber (60) und der Verriegelungsarm (61) unterhalb der Öffnung (16) angeordnet sind
wobei der Kartenauswurfschieber (50) beim Einschieben einer Karte (11) von deren Vorderkante betätigt wird und zwar aus seiner Ruhestellung zu seiner Lesestellung hin
während der Kartenverriegelungsschiebers (60) vom Kartenauswurfschieber (50) mit seinem Kartenverriegelungsanschlag (54) kurz vor Erreichen seiner verriegelungsposition, somit kurz bevor die Karte (11) ihre Lesestellung erreicht, in Eingriff kommt und von diesem mitbewegt wird, wobei
der Kartenauswurfschieber (50) einen größeren Hub besitzt als der Kartenverriegelungsschieber (60)
und wobei an der Bodenplatte (14) eine Steuerkurve (28) angeordnet ist,
und die Steuerkurve (28) den Kartenverriegelungsschieber (60) kurz vor dem Erreichen der Verriegelungsposition so anhebt das dieser in Eingriff mit der Hinterkante der Smart Card kommt.

2. Smart Card Connector nach Anspruch 1 **dadurch gekennzeichnet, dass** das Gehäuses (13) ein Kartentragelement (14) und einen Deckel (12) aufweist und der Kartenauswurfschieber (50), die Verriegelungsmittel (40) und der Kartenverriegelungsschieber (60) auf der Oberseite des vorzugsweise plattenförmig ausgebildeten Kartentragelements (14) gelagert sind.

3. Smart Card Connector nach Anspruch 1 **dadurch gekennzeichnet, dass** der Kartenauswurfschieber (50), die Verriegelungsmittel (40) und der Kartenverriegelungsschieber (60) sämtlich linearverschiebbar am Gehäuse (13) gelagert sind.

4. Smart Card Connector nach Anspruch 1 dadurch gekenntzeichnet, dass der Kartenverriegelungsschieber (60) und der Kartenauswurfschieber (50) in einer Linie, das heißt fluchtend längs einer der Seitenkanten des Gehäuses (13) angeordhet sind.

5. Smart Card Connector nach Anspruch 1 **dadurch gekennzeichnet, dass** die Verriegelungsmittel (40) als Verriegelungsschieber (40) ausgebildet sind, der Parallel der Querkante des Gehäuses (13) verläuft.

6. Smart Card Connector nach Anspruch 1 **dadurch gekennzeichnet, dass** ein Elektromagnet (37) 90° quer zur Einschubrichtung der Karte (11), somit parallel zur Bewegungsrichtung der Verriegelungsmittel (40), jedenfalls deren Bewegungsrichtung angeordnet ist, wobei der Zuganker (38) des Elektromagneten (37) mit den Verriegelungsmitteln (40) gekuppelt ist.

7. Smart Card Connector nach Anspruch 1 **dadurch gekennzeichnet, dass** an der Oberseite des Gehäuses (13) Führungsrinnen (27, 25, 26) angeordnet sind und zwar für die Verriegelungsmittel (40), den Kartenauswurfschieber (50), und den Kartenverriegelungsschieber (60).

8. Smart Card Connector nach Anspruch 1 **dadurch gekennzeichnet, dass** der Kartenverriegelungsschieber (60) mit dem Kartenauswurfschieber (50) gekuppelt ist.

9. Smart Card Connector nach Anspruch 1 **dadurch gekennzeichnet, dass** der Kartenauswurfschieber (50) axial auf einen verjüngten Abschnitt des Verriegelungsschiebers (60) montiert ist.

10. Smart Card Connector nach Anspruch 1 **dadurch gekennzeichnet, dass** der bewegliche Kartenauswurfschieber (50), die Verriegelungsmittel (40) und der Kartenverriegelungsschieber (60) durch einen Deckel abgedeckt (12) sind.

11. Smart Card Connector nach Anspruch 1 **dadurch gekennzeichnet, dass** durch den größeren Hub des Kartenauswurfschiebers (50) der Kartenauswurfschieber (50) die Karte (11) soweit aus dem Smart Card Reader (10) auswirft, dass sie gut mit der Hand gegriffen werden kann.

12. Smart Card Connector nach Anspruch 1 **dadurch gekennzeichnet, dass** eine schlittenlose Kartenführung vorgesehen ist.

13. Smart Card Connector nach Anspruch 1, der ferner Folgendes aufweist:
ein Kartentragelement (14) welches einen Kontaktsatz (36) für die Kontaktierung der auf einer Smart Card (11) angeordneten Kontakte trägt;
wobei der Kartenauswurfschieber (50), in Einschieberichtung der Smart Card (11) zwischen einer Ruheposition und einer Verriegelungsposition hin- und herbewegbar am Kartentragelement (14) gelagert und in die Ruheposition vorgespannt ist;
wobei die Verriegelungsmittel (40) ein Kartenauswurfschieberverriegelungselement (40) aufweisen, welches am Kartentragelement (14) zwischen einer Kartenauswurfschieberverriegelungsposition und einer Kartenauswurfschieberentriegelungsposition bewegbar gelagert ist;
wobei der Kartenverriegelungsschieber (60), am Kartentragelement (14) hin- und
herbewegbar zwischen einer Kartenverriegelungsposition und einer Kartenentriegelungsposition bewegbar ist; und
wobei ferner eine direkte Kupplung zwischen dem Kartenauswurfschieber (50) und dem Kartenverriegelungsschieber (60) derart vorgesehen ist, dass
1) der Kartenverriegelungsschieber (60) durch den Kartenauswurfschieber (50) in seine Kartenentriegelungsposition vorgespannt wird und, dass
2) der Kartenverriegelungsschieber (60) durch den Kartenauswurfschieber (50) beim Schieben des Kartenauswurfschiebers (50) in seine Verriegelungsposition in eine Kartenverriegelungsposition mitgenommen wird.

## Claims

1. A smart card connector (10) comprising:
a housing (13) with a bottom plate (14) and an opening (16) provided above the bottom plate (14), said opening (16) being adapted for the insertion of a card (11);
a card ejection slide (50) movably arranged in said housing,
said card ejection slide (50) being moved out of a rest position into a locking position, said movement being against the force of a card ejection spring (59) which acts onto said card ejection slide (50);
locking means (40) for locking and releasing the card ejection slide (50) in its and from its locking position,
a card locking slide (60) having a locking arm (61), said card locking slide (60) being moveably relative to the card ejection slide (50) having a card locking abutment (54), said card locking slide (50) being movable by means of said card locking abutment (54), said locking arm (61) being adapted to come, when the card is moved into its reading position, into engagement with the back edge of the card and adapted to lock the smart card in the reading position; and
wherein the card locking slide (60) and the locking arm (61) are arranged below the opening (16);
wherein the card ejection slide (50), when a card (11) is inserted with the front edge of said card, is actuated from its rest position to its reading position,
while the card locking slide (60) is engaged by the card locking abutment (54) of the card ejection slide (50) shortly before reaching its locking position i.e. shortly before the card (11) reaches its reading position, and the card locking abutment (54) comes into engagement therewith and is moved therewith, wherein the card ejection slide (50) has a larger stroke than the card locking slide (60);
wherein at the bottom plate (14) comprises a control curve (28) which lifts the card locking slide (60) shortly before reaching its locking position such,
that the card locking slide (60) engages the back edge of the smart card.

2. The smart card connector of Claim 1 **characterized in that** the housing (13) comprises a card support element (14) and a cover (12) and the locking means (40) and the card locking slide (60) are supported on said card support element (14) which is preferably plate-shaped.

3. The smart card connector of Claim 1 **characterized in that** the card ejection slide (50), the locking means (40) and the card locking slide (60) are all supported by the housing (13) for a linear sliding movement.

4. The smart card connector of Claim 1 **characterized in that** the card locking slide and the card ejection slide (50) are arranged in one line, i.e. a line along one of the side edges of the housing (13).

5. The smart card connector of Claim 1 **characterized in that** the locking means (40) are designed as a locking slide (40) extending parallel to the transverse edge of the housing (13).

6. The smart card connector of Claim 1 **characterized in that** a solenoid (37) is located transversely preferably 90° with respect to the direction of insertion of the card (11) and thus parallel to the direction of movement of the locking means (40), i.e., generally in the direction of movement of said locking means, wherein an armature (38) of the solenoid (37) is coupled to said locking means (40).

7. The smart card connector of Claim 1 **characterized in that** at the upper surface of the housing (13) guide grooves (27, 25, 26) are provided for the locking means (40), the card ejection slide (50) and the card locking slide (60).

8. The smart card connector of Claim 1 **characterized in that** the card locking slide (60) is coupled to said card ejection slide (50).

9. The smart card connector of Claim 1 **characterized in that** the card ejection slide (50) is axially mounted on a reduced section of the locking slide (60).

10. The smart card connector of Claim 1 **characterized in that** the movable card ejection slide (50), the locking means (40) and the card locking slide (60) are covered by a cover (12).

11. The smart card connector of Claim 1 **characterized in that** due to the larger stroke or path of movement of the card ejection slide (50), the card ejection slide (50) ejects the card (11) so far out of the smart card reader that it can be easily grasped with the hand.

12. The smart card connector of Claim 1 **characterized in that** card movement does not require a slide means.

13. A pushmatic smart card connector comprising:
a card support element (14) supporting a set of contact elements (36) for contacting the contacts on a smart card (11);
a card ejection slide (50) which is reciprocally mounted between a rest position and a locking position in the direction of insertion of the smart card (11) at the card support element (14), and wherein said card ejection slide (50) is biased into its rest position;
a card ejection slide locking element (40), which is movably mounted at the card support element (14) for movement between a card ejection slide locking position and a card ejection slide unlocking position;
a card locking slide (60) which is reciprocally mounted at the card support element (14) between a card locking position and a card unlocking position;
a direct coupling between the card ejection slide (50) and the card locking slide (60) such that
1) the card locking slide (60) is biased into its card unlocking position by said card ejection slide (50) and that
2) the card locking slide (60) is carried along by the card ejection slide (50) into a card locking position at the time the card ejection slide (50) is moved into its locking position.

## Revendications

1. Connecteur de carte à puce (10), comprenant :
un boîtier (13) comportant une plaque de fond (14) et une ouverture (16) prévue au-dessus de la plaque de fond (14), l'ouverture (16) étant adaptée à l'insertion d'une carte (11) ;
une glissière d'éjection de carte (50) mobile dans le boîtier,
la glissière d'éjection de carte (50) étant déplacée d'une position de repos vers une position de verrouillage, le mouvement se faisant contre la force d'un ressort d'éjection de carte (59) qui agit sur la glissière d'éjection de carte (50) ;
des moyens de verrouillage (40) pour verrouiller la glissière d'éjection de carte (50) dans sa position de verrouillage et pour l'en libérer,
une glissière de verrouillage de carte (60) comportant un bras de verrouillage (61), la glissière de verrouillage de carte (60) étant mobile par rapport à la glissière d'éjection de carte (50) et comportant une butée de verrouillage de carte (54), la glissière de verrouillage de carte (50) étant mobile au moyen de la butée de verrouillage de carte (54), le bras de verrouillage (61) étant adapté pour venir, lorsque la carte est déplacée dans sa position de lecture, en contact avec le bord arrière de la carte et adapté à verrouiller la carte à puce dans la position de lecture ; et
dans lequel la glissière de verrouillage de carte (60) et le bras de verrouillage (61) sont agencés en dessous de l'ouverture (16) ;
dans lequel la glissière d'éjection de carte (50), lorsqu'une carte (11) est insérée avec le bord avant de la carte, est déplacée de sa position de repos vers sa position de lecture,
tandis que la glissière de verrouillage de carte (60) est contactée par la butée de verrouillage de carte (54) de la glissière d'éjection de carte (50) peu avant d'atteindre sa position de verrouillage, c'est-à-dire peu avant que la carte (11) atteigne sa position de lecture, et la butée de verrouillage de carte (54) vient en contact avec elle et est déplacée avec elle, la glissière d'éjection de carte (50) ayant une course plus grande que la glissière de verrouillage de carte (60) ;
dans lequel la plaque de fond (14) comprend une courbe de contrôle (28) qui soulève la glissière de verrouillage de carte (60) peu avant qu'elle atteigne sa position de verrouillage, de sorte que la glissière de verrouillage de carte (60) vient en contact avec le bord arrière de la carte à puce.

2. Connecteur de carte à puce selon la revendication 1, **caractérisé en ce que** le boîtier (13) comprend un élément support de carte (14) et un couvercle (12) et les moyens de verrouillage (40) et la glissière de verrouillage de carte (60) sont supportés par l'élément support de carte (14) qui a de préférence une forme de plaque.

3. Connecteur de carte à puce selon la revendication 1, **caractérisé en ce que** la glissière d'éjection de carte (50), les moyens de verrouillage (40) et la glissière de verrouillage de carte (60) sont tous supportés par le boîtier (13) pour un mouvement de coulissement linéaire.

4. Connecteur de carte à puce selon la revendication 1, **caractérisé en ce que** la glissière de verrouillage de carte et la glissière d'éjection de carte (50) sont sur une même ligne, c'est-à-dire une ligne suivant l'un des bords latéraux du boîtier (13).

5. Connecteur de carte à puce selon la revendication 1, **caractérisé en ce que** les moyens de verrouillage (40) sont conçus sous la forme d'une glissière de verrouillage (40) s'étendant parallèlement au bord transversal du boîtier (13).

6. Connecteur de carte à puce selon la revendication 1, **caractérisé en ce qu'**un solénoïde (37) est situé de façon transversale de préférence à 90° par rapport à la direction de l'insertion de la carte (11) et ainsi parallèle à la direction du mouvement des moyens de verrouillage (40), c'est-à-dire de façon générale dans la direction de mouvement des moyens de verrouillage, une armature (38) du solénoïde (37) étant couplée aux moyens de verrouillage (40).

7. Connecteur de carte à puce selon la revendication 1, **caractérisé en ce que**, au niveau de la surface de supérieure du boîtier (13), sont prévues des gorges de guidage (27, 25, 26) pour les moyens de verrouillage (40), la glissière d'éjection de carte (50) et la glissière de verrouillage de carte (60).

8. Connecteur de carte à puce selon la revendication 1, **caractérisé en ce que** la glissière de verrouillage de carte (60) est couplée à la glissière d'éjection de carte (50).

9. Connecteur de carte à puce selon la revendication 1, **caractérisé en ce que** la glissière d'éjection de carte (50) est montée axialement sur une partie à section réduite de la glissière de verrouillage (60).

10. Connecteur de carte à puce selon la revendication 1, **caractérisé en ce que** la glissière mobile d'éjection de carte (50), les moyens de verrouillage (40) et la glissière de verrouillage de carte (60) sont couvertes par un couvercle (12).

11. Connecteur de carte à puce selon la revendication 1, **caractérisé en ce que**, en raison de la plus grande course ou du plus grand chemin de mouvement de la glissière d'éjection de carte (50), la glissière d'éjection de carte (50) éjecte la carte (11) si loin hors du lecteur de carte à puce qu'elle peut être facilement saisie avec la main.

12. Connecteur de carte à puce selon la revendication 1, **caractérisé en ce que** le mouvement de la carte ne nécessite pas de moyens de glissière.

13. Connecteur de carte à puce de type Pushmatic comprenant :
un élément support de carte (14) supportant un ensemble d'éléments de contact (36) pour contacter les contacts d'une carte à puce (11) ;
une glissière d'éjection de carte (50) qui est montée de façon à aller et venir entre une position de repos et une position de verrouillage dans la direction d'insertion de la carte à puce (11) au niveau de l'élément support de carte (14), et la glissière d'éjection de carte (50) étant sollicitée vers sa position de repos ;
un élément de verrouillage de glissière d'éjection de carte (40), qui est monté de façon mobile sur l'élément support de carte (14) pour un mouvement entre une position de verrouillage de glissière d'éjection de carte et une position de déverrouillage de glissière d'éjection de carte ;
une glissière de verrouillage de carte (60) qui est montée de façon à aller et venir sur l'élément support de carte (14) entre une position de verrouillage de carte et une position de déverrouillage de carte ;
un couplage direct entre la glissière d'éjection de carte (50) et la glissière de verrouillage de carte (60) de sorte que
1) la glissière de verrouillage de carte (60) est sollicitée vers sa position de verrouillage de carte par la glissière d'éjection de carte (50) et que
2) la glissière de verrouillage de carte (60) est transportée par la glissière d'éjection de carte (50) dans une position de verrouillage de carte à l'instant où la glissière d'éjection de carte (50) est déplacée dans sa position de verrouillage.
